# EUROPEAN PATENT SPECIFICATION

(11) **EP 3 461 684 B1**
(45) Date of publication and mention of the grant of the patent: **23.06.2021**
(21) Application number: 18167941.6
(22) Date of filing: 18.04.2018
(51) Int. Cl.: B60N 2/01, B60N 2/68, B60N 2/24, B61D 33/00, B60N 2/015

(54) **BEARING STRUCTURE OF PASSENGERS SEATS FOR VEHICLES**
TRAGENDE STRUKTUR FÜR FAHRZEUGSITZE
STRUCTURE PORTANTE POUR SIÈGES DE VÉHICULE

(30) Priority: 20.04.2017 IT 201700043293
(43) Date of publication of application: 03.04.2019
(73) Proprietor: F.I.S.A - Fabbrica Italiana Sedili Autoferroviari - SRL, 33010 Rivoli de Osoppo (Udine) (IT)
(72) Inventor: DE SIMON, Stefano, 33010 Rivoli di Osoppo (Udine) (IT)
(74) Representative: Petraz, Gilberto Luigi

(56) References cited:
- EP-A1- 0 625 445
- WO-A1-93/16896
- FR-A1- 2 515 946
- GB-A- 1 149 323
- US-A- 5 464 273
- US-B1- 6 550 861

## Description

The present invention refers to a bearing structure for passenger and/or driver seats of vehicles or transporting means, particularly adapted to be installed in trains, trams, trolley buses, buses, aircrafts, vessels, and other public and/or private transporting means which are anyway provided with seats for receiving persons.

It is known that the passenger, driver, and/or engineer seats, both single (one place) or of the bench type (for example two places), which are installed on rail-based or road-based public transport vehicles such as (surface or underground) trains, trams, trolley buses, buses, airplanes, ships, etcetera, comprise a general base structure (or support frame) on which the accessories of the seat, such as armrests, feet, tables, brackets, seating (or cushion), backrest, etcetera, are applied.

The base structures of passenger and/or engineer seats are now made according to several structural types, each of them is basically designed to provide the required and necessary mechanical strength, structural strength or supporting capacity to the overall seat, with the system to which the seat itself is anchored to the floor or to a reference structure - such as the side of a train for a so-called cantilevered seat, in other words only anchored to the inner wall of the side of a train - of the transport vehicle.

Examples of structures for known type passenger seats are shown for examples in the prior art documents: EP 1 232 069 B1, US 5,464,273 A, GB 2468365 A and IT 1413467 (this latter reference is in the name of the same Applicant of the present application), which are considered part of the prior art of the present invention.

Indeed, in the specific, the present invention particularly refers, even though substantially in a non-restrictive way, to those bearing structures for passenger seats, which are already commercially available, which comprise at least one support body obtained by die-forming a single piece of metal material, and therefore is monolithic or monobloc.

It is immediately specified that if the seat is single - in other words one place - according to the standard considered in the following technical description, the base structure associated to the former, comprises a single support body, while if the seat is of a bench-type - two places/plural places - the associated base structure can comprise, as an alternative, two or more separated, juxtaposed support bodies distinct from each other.

The support body, which is for example die formed in a single piece, of the seat structures of the known art is substantially shaped as a L in order to anatomically reproduce the shape of the human body of a person in the seated position, defining a base portion adapted to support the seating (or pad) of the passenger and/or driver seat, and an upwardly protruding abutting portion adapted to support the backrest of the passenger and/or driver seat, at least one of the base portion and (more preferably) abutting portion being provided with a pair of reciprocally opposite folded side edges which outwardly protrude according to a plane substantially orthogonal to the plane defined by a bottom central wall of the base portion and/or abutting portion.

Some structures for passenger seats of the prior art, to which the present discussion relates, further comprise reinforcement means, generally in the shape of transversal bars, associated in a different and articulated way to the support body and responsible for imparting a determined structural stability to the seat, once the same is manufactured and installed .

When designing and assembling a structure for passenger, driver and/or engineer seats for transporting means, especially with reference to cantilevered seats, a manufacturer, as it is known, must take into consideration and very accurately calculate some mechanical properties of the actual components, such as the mechanical strength.

Specifically, the regulations and specifications on the manufacturing of passenger seats, specify that the support bodies must be subjected to a test by which their effective capacity of resisting to determined applied loads is verified.

In addition, it should be considered that the strength of the passenger seats, particularly those providing an integrally die formed support body, in other words monobloc and monolithic, must progressively increase by approaching to the before cited folded area, in which, as it is known, the concentration of the stresses to which a passenger seat for a transport system, such as a train, is subjected, are the highest.

The more common traditional support bodies for bearing structures of the prior art for passenger, driver and/or engineer seats for transporting means, are not intrinsically capable of offering suitable and/or required structural mechanical strength levels, so that today it is inevitably necessary to suitably support them by an anchoring and/or reinforcement frame (available as several constructive models) fixed to the floor of the vehicle, or to a generic and equivalent reference structure, inside the vehicle.

This determines, with reference to the particular bearing structures of the passenger, driver and/or engineer seats of the known art, referring also to those of the type comprising a monobloc support body, some well-known disadvantages, among them the main one consists of the large number of the constituent parts by which the bearing structures are formed and which consequently complicates or at least excessively increases, from one side, the manufacturing times (for example the painting process to which the constituent parts must be subjected) and, on the other side, the assembling step.

For the same employed manpower and materials, it follows an inevitable excessive increase of the time and costs for manufacturing the particular structures for passenger, driver and/or engineer seats of the prior art which, as said, are the object of the present invention.

In addition, the excessive number of constituent parts of the more common structures for passenger seats, makes more complex the logistics associated to them (for example in terms of item costs to be managed at a warehouse level and by an electronic computer).

Moreover, the conventional known bearing structures, for example of the monobloc support body type, for passenger, driver and/or engineer seats for transporting means exhibit a sub-optimal or anyway improvable vibrational behavior determined by the very excessive number of constituent parts which characterizes them and which negatively weights on the associated rigidity values.

These limitations of the more common and standard known art, which many manufacturers in the field still use, are generally solved by the improved structure described in the Italian patent IT 1413467 in which, particularly, the reinforcement means comprise a single stiffening tubular element solidly connected to the support body by structural connecting means in order to make sturdy the support body, and generally stiff the improved structure to the point of contrasting, under operative conditions, the stresses generated by the body of the seated passenger, driver or engineer, wherein, particularly, the structural connecting means comprise any structural joining material selected in the group comprising welding with or without weld deposit, adhesive materials, and similar.

However, the solutions of the improved structure for passenger, driver and/or engineer seats, devised in this way, are also not devoid of some inconveniences which emerge in the operative conditions.

A first inconvenience of the more updated known types of bearing structures shown in the Italian patent IT 1413467 for example, is determined by the side edges of the abutting portion - the one which under operative conditions form the backrest of the seat and supports the back of the passenger, driver and/or engineer - which despite the fact are, as known, folded as a L-shaped cross-section, are structurally weak and tend to already break in the factory operative test, so that they require additional reinforcement elements (implemented as sheets, plates, brackets, etcetera) on the inner wall (facing the inner face of the base portion) of the side edges (particularly, on the segment with the smallest length of the L profile), which in turn causes other disadvantages, first of all, a constructive complexity and an increase, even though small, of the manufacturing costs.

A second inconvenience of the bearing structures for passenger, driver and/or engineer seats of vehicles, described in the Italian patent IT 1413467 for example, is determined by the fact the support body (considered alone, without reinforcement means structurally coupled to it) has still also a high weight or which at least should be suitably and optimally reduced, at least for further decreasing the manufacturing cost of the finished product (for the same other factors considered in the calculation, such as the manpower and raw material costs).

Other known bearing structures that however suffer of the above inconveniences are described for example in the documents WO 93/16896 A1, FR 2515946 A1 and EP 0625445 A1.

Therefore, by knowing said inconveniences of the state of the art, the present invention intends to completely overcome them.

Generally, the primary object of the present invention consists of providing a bearing structure for passenger and/or driver seats of vehicles or transporting means which exhibits a structural mechanical resistance better than the equivalent bearing structures of the known type, without increasing the thickness of the main component thereof, in other words the support body.

In other words, the main object of the invention consists of providing a bearing structure for passenger, driver and/or engineer seats of vehicles, which is structurally more reinforced than the bearing structures of the prior art, without determining or without obtaining this goal, by a simple and obvious increase of the thickness of the support body, on the contrary, by reducing such thickness.

In the knowledge field of such object, it is a task of the invention to provide a bearing structure for passenger seats of vehicles, having manufacturing times and costs less than the ones of bearing structures of similar seats of the known art, for the same other generic factors impacting the calculation of such costs, such as the manpower cost and the cost of the employed raw materials.

It is a second object of the present invention to devise a bearing structure, preferably of a type comprising a support body obtained by die-forming a metal material for passenger seats of vehicles or transporting means which intrinsically shows the required suitable mechanical structural strength, consequently avoiding to transfer the associated structural capacity to secondary elements, as those forming the anchoring and/or reinforcement frame fixed to the transport system, as is typical of the prior art.

It is another object of the present invention to provide a bearing structure for passenger seats of vehicles, which, in comparison with the structures for passenger and/or driver seats of the state of the art comparable to it, leads to a smaller use of raw materials (in terms of quantity or weight) for manufacturing the support body, and which therefore exhibits, generally, a weight less than the one of the equivalent bearing structures of the known art, while the mechanical strength properties required by the market, by specific tests of the customers and/or by the current sector-specific regulations, are maintained .

Last but not least, it is an object of the present invention to devise a bearing structure for passenger, driver and/or engineer seats of vehicles or transporting means which is characterized by a vibrational behavior comparable to the one of analogous bearing structures of the known art, while remaining in the conceptual logic of the above listed objects.

The cited objects are obtained by a bearing structure for passenger seats of vehicles according to the attached claim 1, to which is made reference for the sake of clarity.

Further technical detailed characteristics of the bearing structure of the invention, are included in the dependent claims.

The before cited claims, specifically and concretely defined in the following, are meant as an integral part of the present disclosure.

Advantageously, the bearing structure for passenger seats of vehicles, of the invention, exhibits a suitable mechanical strength comparable to the one of bearing structures of the prior art equivalent to it, and such to enable to pass the operative tests, and having, at the same time, a thickness smaller than such known type bearing structures.

This is due to the fact that it comprises a further double fold of at least one longitudinal section of at least one of the side already folded edges of the abutting portion and/or of the base portion of the support body; such double fold, which has a cross-section having a substantially U-shaped profile, determines a kind of curl at such longitudinal section which, in turn, determines a substantial increase of the mechanical strength of the support body capable of compensating the thickness reduction - and therefore the weight reduction - of the support body itself by which is designed and manufactured the bearing structure of the invention, and which is the beginning or target from which starts the project of the Applicant of the invention itself.

In an equally advantageous way, based on what was hereinbefore cited, the bearing structure for passenger seats of vehicles of the invention, has also a weight less the ones of the bearing structures of the known art comparable with it, without jeopardizing the structural mechanical strength thereof.

Still advantageously, the bearing structure for passenger seats of vehicles, of the present invention, has a lower manufacturing cost or anyway certainly competitive in comparison with the equivalent known bearing structures, also, and most of all, in virtue of a smaller amount of metal material required for assembling the support body characterizing it.

Further characteristics and features of the invention will better appear in the following description regarding some preferred embodiments of the bearing structure for passenger, driver and/or engineer seats of vehicles, object of the present invention, given only in an indicative, illustrative but not in a restrictive way, with reference to the attached drawings, wherein:
- Figure 1 is an axonometric partial view of a first embodiment variant of the bearing structure for passenger, driver and/or engineer seats of the invention;
- Figure 2 is a first side full view of the bearing structure of Figure 1;
- Figure 3 is a second side full view of the bearing structure of Figure 1;
- Figure 4 is the front or rear view of the bearing structure of Figure 1;
- Figure 5 is the view of Figure 4 along the cross-section plane V-V;
- Figure 6 is the plan view of the bearing structure of Figure 1;
- Figure 7 is a partial axonometric view of a second embodiment variant of the bearing structure for passenger and engineer seats of the invention;

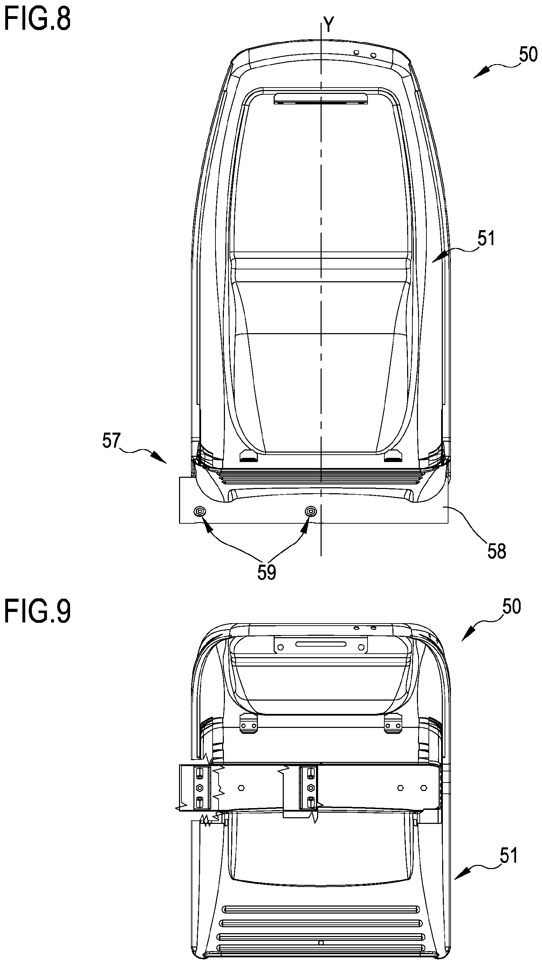

- Figure 8 is the front or rear view of the bearing structure of Figure 7;
- Figure 9 is a plan view of the bearing structure of Figure 7.

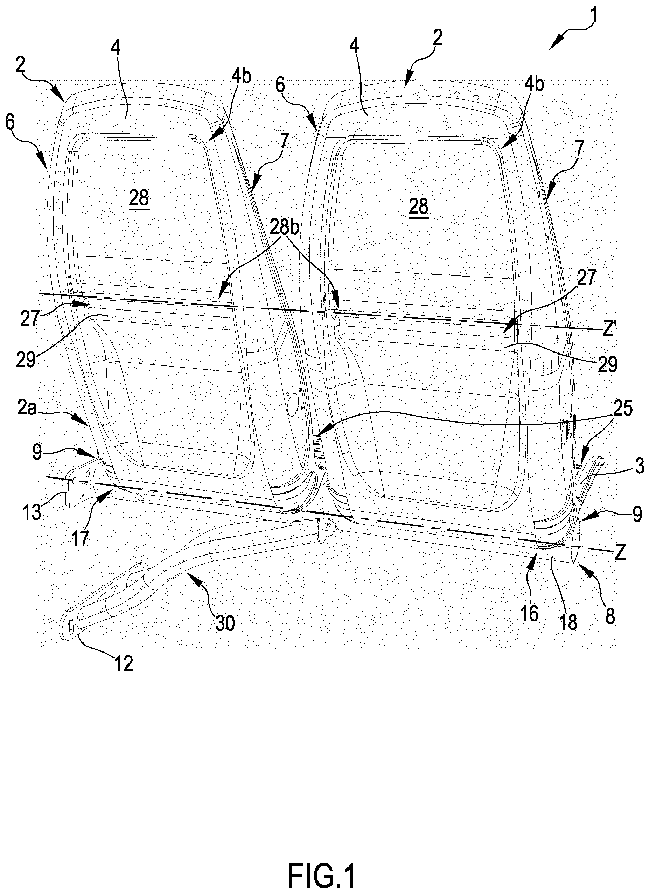

The bearing structure, object of the invention, for passenger, driver and/or engineer seats of vehicles or transporting means e.g. trains and trolley buses (not illustrated in the attached figures), is illustrated in Figure 1 wherein is generally indicated by reference 1.

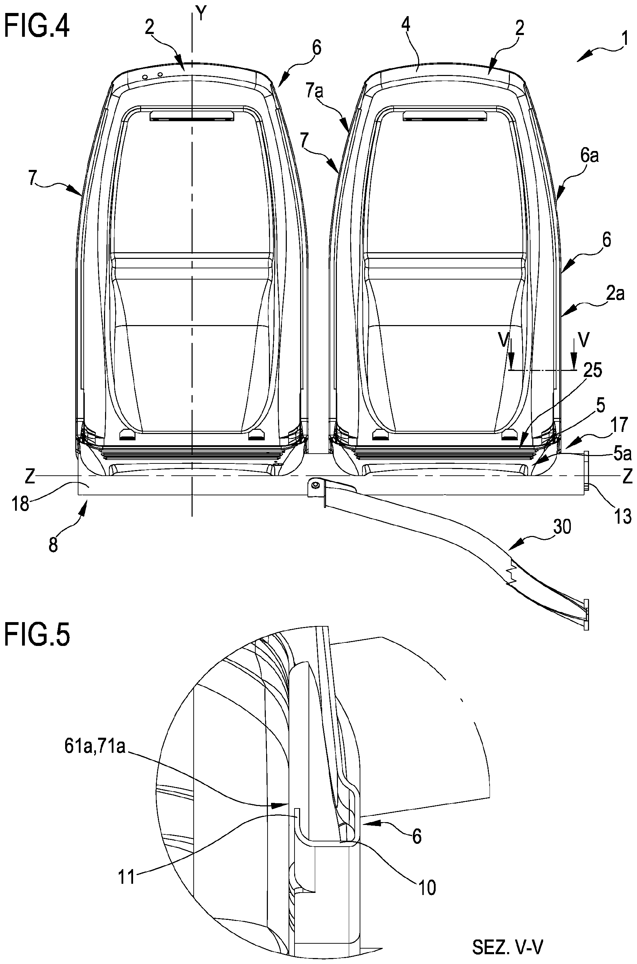

It is observed that, as usual for this type of industrial item, such bearing structure 1 for passenger seats of vehicles, comprises:
- a pair of support bodies 2, each of them being L-shaped in order to comprise a base portion 3 adapted to support the seating of a passenger seat or a driver (and/or also engineer) seat while remaining substantially hidden to the view, and an upwardly protruding abutting portion 4 adapted to support the backrest of the passenger and/or driver seats also substantially hidden to the view and provided with a bottom central wall 5 and, in this case only it, with a pair of reciprocally opposite folded side edges 6, 7 outwardly protruding along a plane substantially orthogonal to the plane defined by the bottom wall 5; particularly with reference to Figure 5, on said folded side edges 6, 7 it is formed a S-shaped double fold defining an abrupt offset of the side edges 6, 7 themselves in order to define a first segment of the folded edge 6, developing parallel to the plane defined by each of said side edges 6, 7;
- reinforcement means, generally indicated by reference 8, transversally coupled to each of the support bodies 2 substantially in proximity of or at a junction zone 9 connecting the base portion 3 to the abutting portion 4.

According to the novel aspects of the invention, in the example herein described and shown in the attached figures, particularly in Figure 5, substantially the overall longitudinal section 6a, 7a of the two folded side edges 6, 7 of the abutting portion 4, comprises also:
- a first auxiliary bend 10, defining a plane substantially orthogonal to the plane defined by each of said folded side edges 6, 7 and substantially parallel to the plane defined by the bottom central wall 5 of the abutting portion;
- a second auxiliary bend 11, consecutive and continuous to the first auxiliary bend and disposed at the free end 61, 71a of the side edges 6, 7 and defining a plane substantially orthogonal to the plane defined by the first auxiliary bend 10 and substantially parallel to the plane defined by each of the folded side edges 6, 7, so that each of the two side edges 6, 7 is substantially curled on itself, by being folded along the longitudinal section 6a, 7a according to a profile which, in cross-section, substantially exhibits a U shape, more particularly a "hook" shape as clearly and precisely shown in Figure 5.

Such constructive arrangement providing a double fold of the side edges 6, 7 already bent according to a first bending plane, substantially contributes to give to the bearing structure 1 of the invention, as a whole, a box shape which increases the mechanical strength in comparison with the known art and, particularly, better prevents the appearance of the instability phenomenon caused by a peak axial load, known as Eulerian instability or buckling in the technical jargon, simultaneously enabling to reduce the thickness of the overall surface extension of the support body 2, to a value not greater than 1.3 mm.

Preferably, the thickness of the support body 2 of the bearing structure 1 of the present invention is actually equal to 1.2 mm: this entails, for each support body 2 (consequently for each seat of the vehicle) a desirable convenient weight reduction of the bearing structure 1, amounting to about 2.5 kg in comparison with the equivalent known-type bearing structures (in which the thickness of the support body is generally of 1.5 mm), without compromising the mechanical strength and/or rigidity or without making difficult the manufacture and/or assembly.

In the following, and until it is specified, the description will only refer to one of the two support bodies 2, which are identical to each other but distinct and separated which form, in this particular example, the bearing structure 1 of the invention of Figure 1: what is discussed with reference to one of the two support bodies 2 obviously is also valid for the other one.

Advantageously with reference to the structural rigidity, the folded side edges 6, 7 and the associated auxiliary bends 10, 11 are made in a single piece with the abutting portion 4 of the support body 2.

Preferably even though not necessarily, the support body 2 is monolithic and is made of a monobloc sheet obtained by die forming a single piece of metal material, such as steel, so that the base portion 3 and abutting portion 4 form together a single body, which helps increase the structural rigidity of the support body 2 itself.

Particularly, in an exemplifying but non-restrictive way, the support body 2 is stably coupled to the vehicle (e.g. a train) by a support foot, not shown, anchored to the inner floor of the vehicle itself by first fixing means, and by an abutting bracket 13, anchored to the inner side wall of the vehicle by second fixing means (wherein, for simplicity, the first fixing means and second fixing means are neither specifically described nor indicated by numeral references, because are of a type known to the person skilled in the field).

The support foot 12 and abutting bracket 13 are preferably oppositely or in a spaced way coupled to the reinforcement means 8 in order to ensure an even distribution of the support function which they must provide.

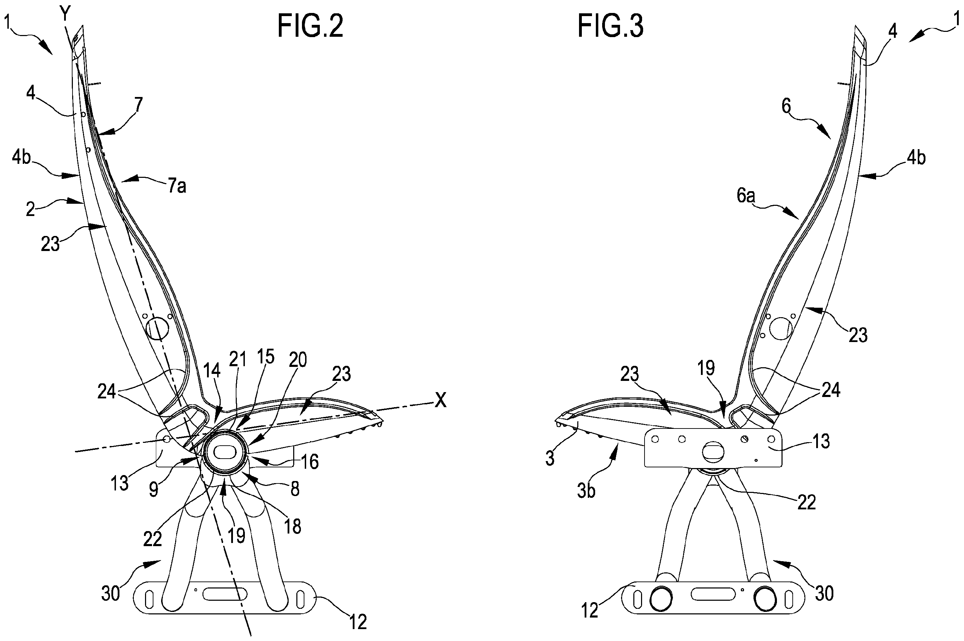

The two side views of Figures 2 and 3 further preferably show that the base portion 3 and abutting portion 4 partially overlap the reinforcement means 8 at a respective overlapping zone 14, 15.

In a preferred but non-limiting way, the reinforcement means 8 are coupled to the support body 2 through structural connecting means generally indicated by 16.

More particularly, the structural connecting means 16 comprise any of the structural junction materials selected in the group comprising welding with or without weld deposit, adhesive materials and/or similar.

Still more particularly, the structural connecting means 16 preferably comprise a weld, obtained by a weld deposit or, in an alternative embodiment, without weld deposit (in this case the weld is of a laser type), applied along the beforehand cited overlapping zone and/or between the outer surface 2a of the support body 2 and a head portion 17 (close to the outer side surface) of the reinforcement means 8.

Preferably and suitably, the weld comprises a continuous section obtained by laser welding, applied on said overlapping zone 14, 15 of the structural body 2 to the reinforcement means 8.

In further embodiments of the bearing structure of the present invention, not shown in the attached drawings, the weld of the structural connecting means can comprise a plurality of dots or welding segments separated and distanced from each other, evenly distributed in the above cited overlapping zone and/or between the inner surface of the support body and a head portion of the reinforcement means.

More preferably but in a non-restrictive way, the reinforcement means 8 comprise, in this case, a stiffening cylindrical tubular element 18 which is, for example, made of steel and develops according to a linear axis Z orthogonal to the development longitudinal axis X, Y respectively of the base portion 3 and abutting portion 4 of the support body 2 of the bearing structure 1.

More particularly and preferably, the stiffening tubular element 18 is coupled to the support body 2 so that it is comprised or disposed in a coupling area 19 which comprises the support body 2 along a height (along a direction defined by the longitudinal axis X and longitudinal axis Y) whose maximum value is equal to the diameter of the stiffening tubular element 18.

In addition, the cylindrical tubular stiffening element 18 partially protrudes from the lower outer face 3b of the only base portion 3 to which is structurally integrated, matching and being partially housed in an open-profile linear seat 20 made in the support body 2.

It is understood that, in other alternative embodiment variants of the bearing structure of the present invention, not accompanied in the following by reference figures, the stiffening cylindrical tubular element of the reinforcement means could partially protrude from the outer face of the base portion as much as of the abutting portion of the support body to which it will be structurally integrated or only from the outer face of the abutting portion.

In the example currently described in a preferred but non-restrictive way, the open-profile linear seat 20 is delimited by a curved wall showing an arc profile having a value substantially of 180°.

More particularly, in this specific case, the stiffening tubular element 18 protrudes from the outer face 3b of the base portion 3 of the support body 2 so that two curved surface sectors 21, 22, opposite to each other, of the stiffening tubular element 18, together defining an arc profile having as said a value substantially of 180°, are symmetrically disposed with respect to a horizontal transversal plane (for example see Figure 2) crossing said linear axis Z.

Substantially, based on what was described, only one of the surface curved sectors 21, 22 of the stiffening cylindrical tubular element 18 is contained in the open-profile linear seat 20 made in the support body 2.

In any case, it is outlined that in further constructive solutions of the bearing structure of the invention, not shown in the drawings attached in the following, the stiffening tubular element could protrude from the outer face (or rear wall) of the support body differently from what has been just described and, therefore, asymmetrically with respect to the horizontal plane crossing said linear axis.

Preferably, even though not necessarily, the stiffening tubular element 18 has a thickness comprised in the range of 0.5 ÷ 3 mm which is in any case comparable with the thickness of the support body 2 which, as beforehand discussed, is preferably equal to 1.2 mm.

Still more preferably, the stiffening cylindrical tubular element 18 has a diameter comprised in the range of 50 ÷ 150 mm.

With reference to the hereinbefore-cited junction zone 9, which connects the base portion 3 to the abutting portion 4 of the support body 2, it is monolithic with the base portion 3 and with the abutting portion 4, according to the preferred herein described embodiment of the invention in which, as previously discussed, the support body is monobloc.

More preferably, but not in a restrictive way, each of the folded side edges 6, 7 both of the abutting portion 4 and base portion 3, comprises first stiffening means, generally indicated by reference 23, adapted to further increase the structural rigidity of the support body 2.

More particularly, such first stiffening means 23 comprise one or more reinforcement ribs 24 outwardly distributed along the surface development of the folded side edges 6, 7 of the abutting portion 4 and base portion 3.

Also in this case, it is noted that other embodiments of the bearing structure of the present invention, not shown in the following, the first stiffening means could be part of least one of the folded side edges of the only base portion or of the only abutting portion of the support body 4.

According to the preferred herein described embodiment of the invention, also the main central body 5 (known as bottom central wall) of the base portion 3 comprises second stiffening auxiliary means, globally indicated by reference 25, adapted to help increase the structural rigidity of the support body 2.

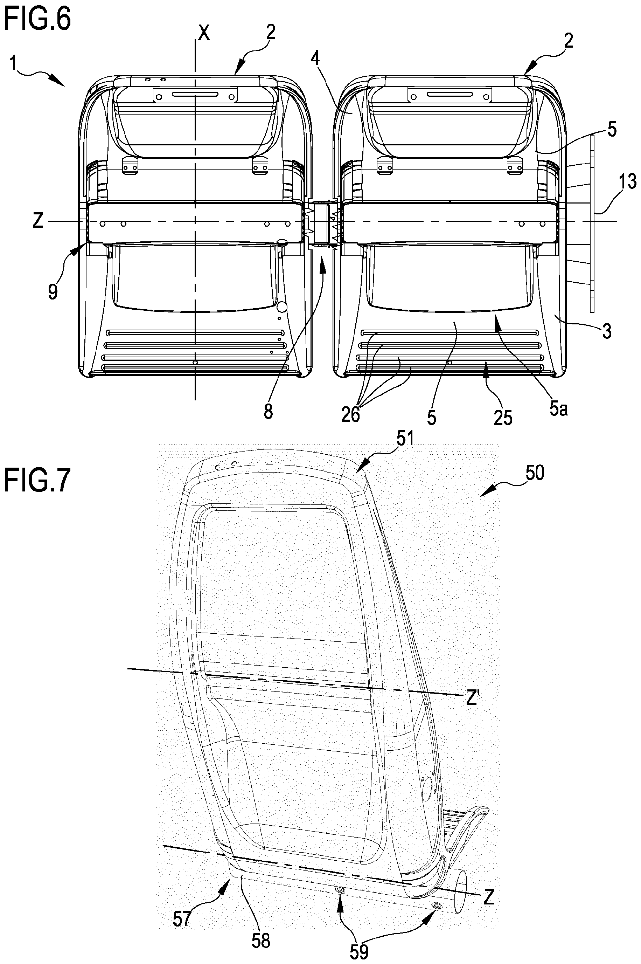

More particularly and preferably, the second stiffening means 25 comprise a plurality of longitudinal ribs 26 protruding from the upper face 5a of the bottom central wall 5 of the base portion 3, as clearly shown in Figures 4 and 6.

It is clear that also with reference to the second stiffening means, what was just discussed with reference to the first stiffening means is still true, in other words that these, in other variants of the bearing structure of the invention, could be part of or can be simultaneously provided on the bottom central wall both of the base portion and abutting portion, or only on the bottom central wall of this latter.

As it is still observed in Figure 1, the abutting portion 4 of the support body 2 has, in the outer face (or rear wall) 4b, a transversal groove 27 separating by a predetermined distance a service table 28 available to a passenger (the one, which, inside a vehicle such as a train, is seated on the seat behind the one to which the bearing structure 1 is installed in this description, which is conventionally considered as a reference) from a transversal bar 29 protruding from such outer face 4b of the abutting portion 4.

Particularly, the service table 28 is, as usual, rotatably coupled to the abutting portion 4 along an auxiliary longitudinal axis Z', in order to define:
- a rest position, in which, as clearly shown in Figure 1, the upper face (not shown in the attached figures) of the service table 28 is disposed close to said outer face 4b of the abutting portion 4 and the service table 28 is substantially contained in the overall dimensions of the abutting portion 4 of the support body 2, without suitably increasing the overall dimensions under similar conditions;
- an operative position (not illustrated) in which the upper face of the service table 28 faces upwardly and the service table 28 protrudes from the outer face 4b of the abutting portion 4 according to a plane incident to or crossing the plane defined by such outer face 4b (or, with better words, parallel to the floor of the vehicle) in order to be available to the passenger for putting objects.

Preferably but in a non-restrictive way, the transversal groove 27 and transversal bar 29 have an ergonomic rounded or convex profile which, together with the predetermined distance separating the lower edge 28b of the service table 28 from the transversal bar 29, offers greater safety conditions for the passenger (particularly in case of a kid) when the service table 28 is rotated about the auxiliary longitudinal axis Z', in order to prevent or alleviate the negative consequences caused by inadvertently possibly pinching the fingers of the passenger.

Particularly, the predetermined distance - representing the height of the transversal groove 27 - separates the service table 28 from the transversal bar 29 in anyone of said rest position and operative position of the service table 28.

Advantageously, the bearing structure 1 of the invention comprises electric connecting means or wirings, generally indicated by reference 30, for electric outlets, also of the USB type, partially contained even though mainly inside the stiffening tubular element 18 of the reinforcement means 8 and adapted to be electrically connected to an electric power unit available on the considered vehicle, outside such tubular element 18, the electric connecting means 30 are suitably insulated and supported by an abutting plate 12 fixed to the inner wall of the vehicle by known type fixing means.

In this way, the electric connecting means or wirings 30 are therefore protected and are not dangerous, and occupy to the smallest possible extent the underlying part of the support body 2.

Figure 7 shows a first embodiment variant of the invention, in which the bearing structure, herein generally indicated by reference 50, is distinguished from the beforehand one described in Figures from 1 to 7 and indicated by reference 1, first of all by comprising a single support body 51, preferably always of a monobloc type.

In addition, the bearing structure 50 of the invention distinguishes itself from the bearing structure 1 of the invention because it comprises lighting means, generally indicated by reference 59 and, for example, of a low consumption type such as a light strip comprising a plurality of LEDs, coupled to the stiffening tubular element 58 of the reinforcement means 57 so that they face the floor of the vehicle or transporting means, toward which they emit the light when needed, being simultaneously mostly protected inside such tubular element 58.

The bearing structure 1 or 50 of the present invention is set up in the above beforehand defined constructive characteristics before being painted and customized according to the specific and unique requirements of a customer.

The bearing structure 1 or 50 of the invention, as set up, is therefore delivered to the company responsible for completing it by adding to the supporting body 2 or 51 the seating, backrest, armrests and other accessories which usually are part of a passenger seat for public and/or private transporting means in the interest of the operations to be implemented for performing an effective and efficient transport.

Based on the just given description, it is therefore understood that the bearing structure for passenger, driver and/or engineer seats of vehicles, object of the present invention, meets the objects and obtains the beforehand cited advantages.

In the manufacturing step, it is possible to introduce modifications to the supporting structure for passenger, driver and/or engineer seats of vehicles of the invention, consisting for example of reinforcement means different from the beforehand described ones with reference to the preferred embodiment of the bearing structure of the invention itself, if not thereby departing from its scope as defined by the claims.

Moreover, in further and less traditional variants of the bearing structure of the invention, which are not provided of illustrative attached drawings, only one of the two side edges, already folded, of the base portion and/or of the abutting portion of the support body, could comprise, on at least one longitudinal section, an additional double fold mostly facing respective bottom central wall.

Additionally, in other constructive solutions of the bearing structure of the invention not shown in the following drawings, only the base portion of the support body could comprise at least one of the two side edges opposite to each other, folded in order to have a substantially U-shaped cross-section, for at least a longitudinal section, or this could happen not just for the base portion but also for the abutting portion of the support body, if not thereby departing from its scope as defined by the claims.

In addition, in other constructive solutions of the herein claimed bearing structure, not shown in the following drawings, it could comprise a single support body, for example one place or two places, to be covered with finishing elements which form the respective passenger seats, without jeopardizing the present invention.

Besides that, it is outlined that the bearing structure of the invention could belong to passenger, driver and/or engineer seats, partially installed to the floor of the vehicle or of the transporting means by a single anchoring foot, or completely abutting on the floor of the transporting means by at least two anchoring feet suitably distanced from each other and applied below the support body or is cantileverly anchored by brackets only to the side wall of the considered transport system, typically a train.

Lastly, it is clear that several other variants can be introduced to the considered bearing structure without falling out of the scope of protection defined by the annexed claims, in the same way it is evident that, in the practical implementation of the invention, the materials, shapes, and dimensions of the illustrated details can be anyone, according to the requirements, and can be substituted by other technical equivalent ones, if not thereby departing from its scope as defined by the claims.

When the constructive characteristics and techniques cited in the following claims are followed by signs or reference numbers, such reference signs are introduced only for aiding the comprehension of the claims themselves and, consequently, they do not have any limiting effect on the comprehension of each element identified, only in an illustrative way, by such reference signs.

## Claims

1. Bearing structure (1; 50) for passenger and/or driver seats of vehicles, comprising:
- at least one substantially L-shaped support body (2; 51) in order to comprise a base portion (3) adapted to support the seating of a passenger and/or driver seat, and an upwardly protruding abutting portion (4) adapted to support the backrest of said passenger and/or driver seat, at least one between said base portion (3) and said abutting portion (4) being provided with a pair of folded side edges (6, 7) opposite to each other, outwardly protruding according to a plane substantially orthogonal to the plane defined by a bottom central wall (5) of said base portion (3) and/or of said abutting portion (4), on said folded side edges (6,7) being formed a double S-shaped fold defining an abrupt offset in order to define a first section of the folded edge (6), developing parallel to a plane defined by each of said side edges (6, 7);
- reinforcement means (8; 57) transversally coupled to said support body (2;51) substantially in proximity of or at a junction zone (9) connecting said base portion (3) to said abutting portion (4), **characterized by** the fact that said base portion (3) and said abutting portion (4) partially overlap said reinforcement means (8; 57) at a respective overlapping zone (14; 15) and at least one longitudinal section (6a, 7a) of at least one of said side edges (6, 7) comprises:
- a first auxiliary bend (10) defining a plane substantially orthogonal to said plane defined by each of said folded side edges (6, 7);
- a second auxiliary bend (11) consecutive to said first auxiliary bend, and disposed at the free end (61a, 71a) of at least one of said side edges (6, 7) and defining a plane substantially orthogonal to said plane defined by said first auxiliary bend (10) and substantially parallel to the plane defined by each of said folded side edges (6, 7),
so that at least one of said side edges (6, 7) is folded for at least said longitudinal section (6a, 7a) according to a profile which, in a transversal cross-section, has a hook shape.

2. Structure (1; 50) according to claim 1, **characterized by** the fact that said support body (2; 51) is monolithic, being obtained by die forming a single piece of metal material, so that said base portion (3) and said abutting portion (4) form a single body with each other.

3. Structure (1; 50) according to anyone of the preceding claims, **characterized by** the fact that said reinforcement means (8; 57) are coupled to said support body (2; 51) by structural connecting means (16).

4. Structure (1; 50) according to claim 3, **characterized by** the fact said structural connecting means (16) comprise any of the structural junction materials selected in the group consisting of welding, adhesive substances and/or similar.

5. Structure (1; 50) according to claim 3, **characterized by** the fact that said structural connecting means (16) comprise a weld applied along said overlapping zone (14, 15) and/or an outer surface (2a) of said support body (2; 51) and a head portion (17) of said reinforcement means (8; 57).

6. Structure (1; 50) according to anyone of the preceding claims, **characterized by** the fact that said reinforcement means (8; 57) comprise a stiffening tubular element (18; 58) developing according to a linear axis (Z) substantially orthogonal to the development longitudinal axis (X, Y) of said base portion and of said abutting portion (4) of said support body (2; 51).

7. Structure (1; 50) according to claim 6, **characterized by** the fact that said stiffening tubular element (18; 58) is coupled to said support body (2; 51) so that it is contained in a coupling area (19) involving said support body (2; 51) for a height whose maximum value is equal to the diameter of said stiffening tubular element (18; 58).

8. Structure (1; 50) according to claim 6 or 7, **characterized by** the fact that said stiffening tubular element (18; 58) partially protrudes from an outer face (3b, 4b) of said base portion (3) and/or of said abutting portion (4) to which is structurally integrated, said tubular stiffening element matching and being partially housed in an open-profile linear opening (20) made in said support body (2; 51).

9. Structure (1; 50) according to anyone of the preceding claims, **characterized by** the fact that said junction zone (9) connecting said base portion (3) to said abutting portion (4) of said support body (2; 51), is monolithic to said base portion (3) and to said abutting portion (4).

10. Structure (1; 50) according to anyone of the preceding claims, **characterized by** the fact that said at least one of said folded side edges (6, 7) of said base portion (3) and/or of said abutting portion (4) comprises first stiffening means (23) adapted to increase the structural rigidity of said support body (2; 51) .

11. Structure (1; 50) according to anyone of the preceding claims, **characterized by** the fact that said bottom central wall (5) of said base portion (3) and/or of said abutting portion (4) comprises second auxiliary stiffening means (25) adapted to increase the structural rigidity of said support body (2; 51).

12. Structure (1; 50) according to claim 11, **characterized by** the fact that said second stiffening means (25) comprise a plurality of longitudinal ribs protruding from the upper face (5a) of said bottom central wall (5) of said base portion (3) and/or of said abutting portion (4).

13. Structure (1; 50) according to anyone of the preceding claims, **characterized by** the fact that said abutting portion (4) of said support body (2; 51) has, in an outer face (4b), a transversal groove (27) separating by a prefixed distance a service table available to a passenger, from a transversal bar protruding from said outer face (4b) of said abutting portion (4), said service table (28) being rotatably coupled to said abutting portion (4) in order to define:
• a rest position, in which, the upper face of said service table (28) is disposed close to said outer face (4b) of said abutting portion (4) and said service table (28) is substantially contained in the overall dimensions of said abutting portion (4) of said support body (2; 51);
• an operative position in which said upper face of said service table (28) faces upwardly and said service table (28) protrudes according to a plane crossing said outer face (4b) of said abutting portion (4) of said support body (2; 51) for being available to said passenger for abutting objects.

14. Structure (1; 50) according to claim 14, **characterized by** the fact that said transversal groove (27) and said transversal bar (29) have a rounded or convex profile.

## Patentansprüche

1. Trägerstruktur (1; 50) für Beifahrer- und/oder Fahrersitze von Fahrzeugen, umfassend:
- wenigstens einen im Wesentlichen L-förmigen Stützkörper (2; 51), um einen Basisabschnitt (3) aufzunehmen, der dazu ausgelegt ist, das Sitzpolster eines Beifahrer- und/oder Fahrersitzes zu unterstützen, und einen nach oben herausstehenden angrenzenden Abschnitt bzw. Lehnenabschnitt (4), der dazu ausgelegt ist, die Rückenlehne des Beifahrer- und/oder Fahrersitzes zu unterstützen, wobei wenigstens einer aus dem Basisabschnitt (3) und dem angrenzenden Abschnitt (4) mit einem Paar von einander gegenüberliegenden gefalteten Seitenkanten (6, 7) versehen ist, die nach außen gerichtet gemäß einer Ebene vorstehen, welche im Wesentlichen senkrecht zu der Ebene ist, die durch eine untere Mittelwand (5) des Basisabschnitts (3) und/oder des angrenzenden Abschnitts (4) definiert ist, wobei ein Doppel-S-förmiger Falz an den gefalteten Seitenkanten (6, 7) ausgebildet ist, welcher einen abrupten Versatz definiert, um einen ersten Bereich der gefalteten Kante (6) zu definieren, wobei sich dieser parallel zu einer durch die jeweiligen Seitenkanten (6, 7) definierten Ebene erstreckt;
- Verstärkungsmittel (8; 57), das quer mit dem Stützkörper (2; 51) gekoppelt ist, und zwar im Wesentlichen in der Nähe oder an einer Verbindungszone (9), die den Basisabschnitt (3) mit dem angrenzenden Abschnitt (4) verbindet, **dadurch gekennzeichnet, dass** der Basisabschnitt (3) und der angrenzende Abschnitt (4) das Verstärkungsmittel (8; 57) in einer entsprechenden Überlappungszone (14; 15) teilweise überlappen und wenigstens ein Längsabschnitt (6a, 7a) von wenigstens einer der Seitenkanten (6, 7) folgendes umfasst:
- eine erste Hilfsbiegung bzw. zusätzliche Krümmung (10), welche eine im Wesentlichen orthogonale Ebene zu der durch jede der gefalteten Seitenkanten (6, 7) definierten Ebene definiert;
- eine zweite Hilfsbiegung (11), anschließend an die erste Hilfsbiegung, die an deren freiem Ende (61a, 71a) von wenigstens einer der Seitenkanten (6, 7) angeordnet ist und eine Ebene definiert, die im Wesentlichen orthogonal zu der durch die erste Hilfsbiegung (10) definierten Ebene und im Wesentlichen parallel zu der durch jede der gefalteten Seitenkanten (6, 7) definierten Ebene ist,
so dass wenigstens eine der Seitenkanten (6, 7) an wenigstens dem Längsabschnitt (6a, 7a) zu einem Profil gefaltet ist, das im Querschnitt eine Hakenform aufweist.

2. Struktur (1; 50) gemäß Anspruch 1, **dadurch gekennzeichnet, dass** der Stützkörper (2; 51) aus einem Guss ist, erhalten durch Gesenkformen eines einzelnen Stückes Metallmaterial, so dass der Basisabschnitt (3) und der angrenzende Abschnitt (4) miteinander einen einzelnen Körper ausbilden.

3. Struktur (1; 50) gemäß einem der vorangehenden Ansprüche, **dadurch gekennzeichnet, dass** das Verstärkungsmittel (8; 57) mit dem Stützkörper (2; 51) durch strukturelle Verbindungsmittel (16) verbunden sind.

4. Struktur (1; 50) gemäß Anspruch 3, **dadurch gekennzeichnet, dass** das strukturelle Verbindungsmittel (16) irgendein strukturelles Fügungsmaterial umfasst, ausgewählt aus der Gruppe, bestehend aus Schweißmitteln, Klebstoffen und/oder ähnlichem.

5. Struktur (1; 50) gemäß Anspruch 3, **dadurch gekennzeichnet, dass** das strukturelle Verbindungsmittel (16) eine Schweißnaht umfasst, die entlang der Überlappungszone (14, 15) und/oder der Außenfläche (2a) des Stützkörpers (2; 51) und eines Kopfabschnitts (17) des Verstärkungsmittels (8; 57) ausgeführt ist.

6. Struktur (1; 50) gemäß einem der vorangehenden Ansprüche, **dadurch gekennzeichnet, dass** das Verstärkungsmittel (8; 57) ein rohrförmiges Versteifungselement (18; 58) umfasst, welches sich entlang einer Längsachse (Z) erstreckt, die sich im Wesentlichen senkrecht zu der Erstreckungsrichtung der Längsachse (X, Y) des Basisabschnitts und des angrenzenden Abschnitts (4) des Stützkörpers (2; 51) erstreckt.

7. Struktur (1; 50) gemäß Anspruch 6, **dadurch gekennzeichnet, dass** das rohrförmige Versteifungselement (18; 58) mit dem Stützkörper (2; 51) derart verbunden ist, dass es in einer Verbindungsfläche (19) enthalten ist, die den Stützkörper (2; 51) in eine Höhe einbezieht, deren Maximalwert gleich dem Durchmesser des rohrförmigen Versteifungselements (18; 58) ist.

8. Struktur (1; 50) gemäß Anspruch 6 oder 7, **dadurch gekennzeichnet, dass** das rohrförmige Versteifungselement (18; 58) teilweise aus der Außenfläche (3b, 4b) des Basisabschnitts (3) und/oder des angrenzenden Abschnitts (4), in welches es strukturell integriert ist, vorsteht, wobei das rohrförmige Versteifungselement passend und teilweise in einer Längsöffnung (20) mit offenem Profil in dem Stützkörper (2; 51) untergebracht ist.

9. Struktur (1; 50) gemäß irgendeinem der vorangehenden Ansprüche, **dadurch gekennzeichnet, dass** die Verbindungszone (9), welche den Basisabschnitt (3) mit dem angrenzenden Abschnitt (4) des Stützkörpers (2; 51) verbindet, aus einem Guss mit dem Basisabschnitt (3) und dem angrenzenden Abschnitt (4) ausgebildet ist.

10. Struktur (1; 50) gemäß irgendeinem der vorangehenden Ansprüche, **dadurch gekennzeichnet, dass** die wenigstens eine gefaltete Seitenkante (6, 7) des Basisabschnitts (3) und/oder des angrenzenden Abschnitts (4) ein erstes Versteifungsmittel (23) umfasst, das ausgelegt ist, die strukturelle Steifheit des Stützkörpers (2; 51) zu erhöhen.

11. Struktur (1; 50) gemäß irgendeinem der vorangehenden Ansprüche, **dadurch gekennzeichnet, dass** die untere Mittelwand (5) des Basisabschnitts (3) und/oder des angrenzenden Abschnitts (4) ein zweites Versteifungsmittel (25) umfasst, das ausgelegt ist, die strukturelle Steifheit des Stützkörpers (2; 51) zu erhöhen.

12. Struktur (1; 50) gemäß Anspruch 11, **dadurch gekennzeichnet, dass** das zweite Versteifungsmittel (25) mehrere Längsrippen umfasst, die aus der oberen Fläche (5a) der unteren Mittelwand (5) des Basisabschnitts (3) und/oder des angrenzenden Abschnitts (4) hervorstehen.

13. Struktur (1; 50) gemäß irgendeinem der vorangehenden Ansprüche, **dadurch gekennzeichnet, dass** der angrenzende Abschnitt (4) des Stützkörpers (2; 51) in der Außenfläche (4b) eine Querfurche (27) aufweist, die einen Abstelltisch für einen Mitfahrer mittels eines vorbestimmten Abstands von einer von der Außenfläche (4b) des angrenzenden Abschnitts (4) hervorstehenden Querstange beabstandet, wobei der Abstelltisch (28) drehbar mit dem angrenzenden Abschnitt (4) verbunden ist, um dadurch zu definieren:
• eine Ruheposition, in welcher die Oberseite des Abstelltisches (28) nahe der äußeren Fläche (4b) des angrenzenden Abschnitts (4) angeordnet ist und der Abstelltisch (28) im Wesentlichen gänzlich in dem angrenzenden Abschnitt (4) des Stützkörpers (2; 51) enthalten ist;
• eine Arbeitslage, in welcher die Oberseite des Abstelltisches (28) nach oben schaut und der Abstelltisch (28) in einer Ebene hervorragt, welche die äußere Fläche (4b) des angrenzenden Abschnitts (4) des Stützkörpers (2; 51) kreuzt, um dem Mitfahrer so für das Ablegen von Objekten verfügbar zu sein.

14. Struktur (1; 50) gemäß Anspruch 14, **dadurch gekennzeichnet, dass** die Querfurche (27) und die Querstange (29) ein rundliches oder ein gewölbtes bzw. konvexes Profil aufweisen.

## Revendications

1. Structure de support (1 ; 50) pour sièges de passagers et/ou de conducteur de véhicules, comprenant :
- au moins un corps de support sensiblement en forme de L (2 ; 51) afin de comprendre une partie de base (3) adaptée pour supporter l'assise d'un siège de passager et/ou de conducteur, et une partie de butée (4) faisant saillie vers le haut, adaptée pour supporter le dossier dudit siège de passager et/ou de conducteur, au moins l'un entre ladite partie de base (3) et ladite partie de butée (4) étant pourvu d'une paire de bords latéraux pliés (6, 7) opposés l'un à l'autre, faisant saillie vers l'extérieur selon un plan sensiblement orthogonal au plan défini par une paroi centrale inférieure (5) de ladite partie de base (3) et/ou de ladite partie de butée (4), sur lesdits bords latéraux pliés (6, 7) étant formé un double pli en forme de S définissant un décalage abrupt afin de définir une première section du bord plié (6), se développant parallèlement à un plan défini par chacun desdits bords latéraux (6, 7) ;
- des moyens de renforcement (8 ; 57) couplés transversalement audit corps de support (2 ; 51) sensiblement à proximité de ou au niveau d'une zone de jonction (9) reliant ladite partie de base (3) à ladite partie de butée (4), **caractérisé par le fait que** ladite partie de base (3) et ladite partie de butée (4) recouvrent partiellement lesdits moyens de renforcement (8 ; 57) au niveau d'une zone de recouvrement respective (14 ; 15) et au moins une section longitudinale (6a, 7a) d'au moins un desdits bords latéraux (6, 7) comprend :
- un premier coude auxiliaire (10) définissant un plan sensiblement orthogonal audit plan défini par chacun desdits bords latéraux pliés (6, 7) ;
- un deuxième coude auxiliaire (11) consécutif audit premier coude auxiliaire, et disposé à l'extrémité libre (61a, 71a) d'au moins un desdits bords latéraux (6, 7) et définissant un plan sensiblement orthogonal audit plan défini par ledit premier coude auxiliaire (10) et sensiblement parallèle au plan défini par chacun desdits bords latéraux pliés (6, 7),
de sorte qu'au moins un desdits bords latéraux (6, 7) est plié pour au moins ladite section longitudinale (6a, 7a) selon un profil qui, dans une section transversale, a une forme de crochet.

2. Structure (1 ; 50) selon la revendication 1, **caractérisée par le fait que** ledit corps de support (2 ; 51) est monolithique, étant obtenu par matriçage d'une seule pièce de matériau métallique, de sorte que ladite partie de base (3) et ladite partie de butée (4) forment un seul corps l'une avec l'autre.

3. Structure (1 ; 50) selon l'une quelconque des revendications précédentes, **caractérisée par le fait que** lesdits moyens de renforcement (8 ; 57) sont couplés audit corps de support (2 ; 51) par des moyens de liaison structurels (16).

4. Structure (1 ; 50) selon la revendication 3, **caractérisée par le fait que** lesdits moyens de connexion structurels (16) comprennent l'un quelconque des matériaux de jonction structurels choisis dans le groupe constitué par la soudure, les substances adhésives et/ou similaires.

5. Structure (1 ; 50) selon la revendication 3, **caractérisée par le fait que** lesdits moyens de connexion structurels (16) comprennent une soudure appliquée le long de ladite zone de chevauchement (14, 15) et/ou une surface extérieure (2a) dudit corps de support (2 ; 51) et une partie de tête (17) desdits moyens de renforcement (8 ; 57).

6. Structure (1 ; 50) selon l'une quelconque des revendications précédentes, **caractérisée par le fait que** lesdits moyens de renforcement (8 ; 57) comprennent un élément tubulaire de raidissement (18 ; 58) se développant selon un axe linéaire (Z) sensiblement orthogonal à l'axe longitudinal de développement (X, Y) de ladite partie de base et de ladite partie de butée (4) dudit corps de support (2 ; 51).

7. Structure (1 ; 50) selon la revendication 6, **caractérisée par le fait que** ledit élément tubulaire de raidissement (18 ; 58) est couplé audit corps de support (2 ; 51) de sorte qu'il est contenu dans une zone de couplage (19) impliquant ledit corps de support (2 ; 51) sur une hauteur dont la valeur maximale est égale au diamètre dudit élément tubulaire de raidissement (18 ; 58).

8. Structure (1 ; 50) selon la revendication 6 ou 7, **caractérisée par le fait que** ledit élément tubulaire de raidissement (18 ; 58) fait partiellement saillie d'une face extérieure (3b, 4b) de ladite partie de base (3) et/ou de ladite partie de butée (4) à laquelle il est structurellement intégré, ledit élément tubulaire de raidissement s'adaptant et étant partiellement logé dans une ouverture linéaire à profil ouvert (20) réalisée dans ledit corps de support (2 ; 51).

9. Structure (1 ; 50) selon l'une quelconque des revendications précédentes, **caractérisée par le fait que** ladite zone de jonction (9) reliant ladite partie de base (3) à ladite partie de butée (4) dudit corps de support (2 ; 51), est monolithique à ladite partie de base (3) et à ladite partie de butée (4).

10. Structure (1 ; 50) selon l'une quelconque des revendications précédentes, **caractérisée par le fait que** ledit au moins un desdits bords latéraux pliés (6, 7) de ladite partie de base (3) et/ou de ladite partie de butée (4) comprend des premiers moyens de raidissement (23) adaptés pour augmenter la rigidité structurelle dudit corps de support (2 ; 51).

11. Structure (1 ; 50) selon l'une quelconque des revendications précédentes, **caractérisée par le fait que** ladite paroi centrale inférieure (5) de ladite partie de base (3) et/ou de ladite partie de butée (4) comprend des seconds moyens de raidissement auxiliaires (25) adaptés pour augmenter la rigidité structurelle dudit corps de support (2 ; 51).

12. Structure (1 ; 50) selon la revendication 11, **caractérisée par le fait que** lesdits seconds moyens de rigidification (25) comprennent une pluralité de nervures longitudinales faisant saillie de la face supérieure (5a) de ladite paroi centrale inférieure (5) de ladite partie de base (3) et/ou de ladite partie de butée (4).

13. Structure (1 ; 50) selon l'une quelconque des revendications précédentes, **caractérisée par le fait que** ladite partie de butée (4) dudit corps de support (2 ; 51) présente, dans une face externe (4b), une rainure transversale (27) séparant d'une distance prédéterminée une table de service disponible pour un passager, d'une barre transversale faisant saillie de ladite face externe (4b) de ladite partie de butée (4), ladite table de service (28) étant couplée de manière rotative à ladite partie de butée (4) afin de définir :
• une position de repos, dans laquelle la face supérieure de ladite table de service (28) est disposée près de ladite face extérieure (4b) de ladite partie de butée (4) et ladite table de service (28) est sensiblement contenue dans les dimensions globales de ladite partie de butée (4) dudit corps de support (2 ; 51);
• une position de fonctionnement dans laquelle ladite face supérieure de ladite table de service (28) est orientée vers le haut et ladite table de service (28) fait saillie selon un plan croisant ladite face extérieure (4b) de ladite partie de butée (4) dudit corps de support (2 ; 51) pour être disponible pour ledit passager pour des objets de butée.

14. Structure (1 ; 50) selon la revendication 14, **caractérisée par le fait que** ladite rainure transversale (27) et ladite barre transversale (29) ont un profil arrondi ou convexe.
